# EUROPEAN PATENT SPECIFICATION

(11) **EP 3 630 520 B1**
(45) Date of publication and mention of the grant of the patent: **07.07.2021**
(21) Application number: 18725380.2
(22) Date of filing: 10.05.2018
(51) Int. Cl.: B60K 15/04

(54) **FILLING HEAD FOR A FUEL TANK, PARTICULARLY OF A VEHICLE**
FÜLLKOPF FÜR EINEN KRAFTSTOFFTANK, INSBESONDERE EINES FAHRZEUGS
TÊTE DE REMPLISSAGE POUR UN RÉSERVOIR DE CARBURANT, EN PARTICULIER D'UN VÉHICULE

(30) Priority: 29.05.2017 FR 1754680
(43) Date of publication of application: 08.04.2020
(73) Proprietor: Illinois Tool Works Inc., Glenview, IL 60025 (US)
(72) Inventor: LE TINNIER, Christophe, Glenview, IL 60025 (US); BAR, Jean-Philippe, Glenview, IL 60025 (US)
(74) Representative: HGF
(86) International application number: PCT/US2018/031985
(87) International publication number: WO 2018/222365

(56) References cited:
- EP-A1- 0 872 370
- DE-A1- 10 331 073
- JP-A- H08 254 289
- US-A1- 2015 343 897

## Description

### TECHNICAL FIELD

The present invention relates to a filling head for a fuel tank, particularly of a vehicle, and to an assembly comprising such a head and a fuel pipe.

### BACKGROUND

A motor vehicle is conventionally equipped with a fuel tank for supplying its combustion engine with fuel. The filling of the tank is performed at a service station by inserting a nozzle into a filling head, which is connected to the tank by a fuel pipe. The filling head is generally accessible by opening an access flap of the vehicle and may or may not be fitted with a cap.

The filling head generally comprises a tubular sleeve of which a first longitudinal end defines a filling opening and of which a second longitudinal end is intended to be fixed to one end of the fuel pipe. A ring is mounted in the sleeve and may comprise a flap able to move between a closed position and an open position. The movement towards the open position is brought about by the insertion of the nozzle and the return to the closed position is generally brought about by return means.

It is known practice to make the fuel pipe from HDPE (high density polyethylene) which is an inexpensive plastic. However, that material has relatively high permeability to fuel. In order to prevent fuels migrating through the material of the pipe, it is known practice to provide a barrier layer on the internal surface thereof.

Another advantage of HDPE is that it is easily weldable, its melting point being of the order of 130-140°C.

To facilitate assembly and reduce the costs of such a filling head it might be conceivable for the sleeve of this head also to be made of HDPE so that it could be welded directly to the HDPE pipe. However, unlike the pipe, it would be too complicated and expensive to coat the inside of the sleeve of the head with a barrier layer to prevent fuel from migrating through the material of the sleeve.

The present invention proposes an improvement to this technology.

JP H08 254 289 describes a fuel filler pipe formed by attaching a metal retainer on the tip opening of a resin pipe main body extending from a fuel tank. A connecting resin layer made of HDPE with a predetermined thickness is formed on the outer peripheral surface of the metal retainer while interposing a injected sealing member between the connecting resin layer and the metal retainer. The pipe main body is welded and fixed on the end surface and the outer peripheral surface of the connecting resin layer. This covers the end surface and a portion of the outer peripheral surface of the connecting resin layer at the tip opening edge of the pipe main body.

### SUMMARY

To this end, the invention proposes a filling head according to claim 1.

In the present application, what is meant by HDPE is a HDPE 300 or more, which means to say an HDPE with a molar mass of 300 g/mol⁻¹ or higher.

The invention thus proposes to bring the sealing means as close as possible to the second end of the sleeve, which end is welded to the pipe. The sleeve portion in which fuel migration is liable to occur and which extends between the second end of the sleeve and the sealing means is thus as small as possible. The risk of such a migration and leak of fuel is thus significantly lowered.

The head according to the invention may comprise one or more of the following features, considered in isolation from one another or in combination with one another:
the said at least one annular sealing gasket comprises an O-ring,
the said annular seal is housed in an external annular groove of the said ring and presses against an internal cylindrical surface of the said sleeve,
the said second end of the said sleeve has an additional thickness,
the said second end comprises a rim or a cylindrical bearing surface for welding of diameter D1, which is connected to a cylindrical wall of diameter D2 of the said sleeve, D2 being greater than D1,
the said sealing means collaborate with an internal cylindrical surface of the said cylindrical wall or of the said cylindrical rim,
the said additional thickness extends into the cylindrical rim and a portion of the said cylindrical wall,
the said sealing means are situated a distance away from a plane passing through a free welding edge of the said second end, measured along an axis of the said sleeve, which represents 0.01 · D to 0.3 · D, preferably 0.05 · D to 0.2 · D, and more preferably 0.1 · D to 0.15 · D, D being an internal diameter of the said sleeve,
the said sealing means have a mean diameter d comprised between 0.5 · D and 1 · D, preferably between 0.7 - D and 0.9 - D, and more preferably between 0.75 · D and 0.85 · D, D being an internal diameter of the said sleeve,
the said additional thickness defines an annular step on an external annular surface of the said cylindrical wall.,
the said ring (and/or the said sleeve) comprises at least one valve and/or centring means and/or poka-yoke means, configured to collaborate with the said filling nozzle.

The present invention also relates to an assembly comprising a head as described hereinabove and a fuel pipe, the said pipe being made of HDPE and having an end fixed by welding to the said second end of the sleeve of the said head.

The assembly according to the invention may comprise one or more of the following features, considered in isolation from one another or in combination with one another:
the said sealing means are situated at a distance from a jointing plane, the joint being made by welding, the distance being measured along an axis of the said sleeve, which represents 0.01 · D to 0.3 · D, preferably 0.05 · D to 0.2 · D, and more preferably 0.1 · D to 0.15 · D, D being an internal diameter of the said sleeve and/or of the said pipe,
the said sealing means have a mean diameter d comprised between 0.5 · D and 1 · D, preferably between 0.7 · D and 0.9 · D, and more preferably between 0.75 · D and 0.85 · D, D being an internal diameter of the said sleeve and/or of the said pipe,
the said ring and/or the said sleeve is at least partially surrounded by the said end of the said pipe.

### DESCRIPTION OF THE FIGURES

The invention will be better understood and further details, features and advantages of the invention will become more clearly apparent from reading the following description given by way of nonlimiting example and from referring to the attached drawings in which:
Figure 1 is a partial schematic view in perspective of one embodiment of an assembly according to the invention, comprising a filling head and a fuel pipe;
Figure 2 is a partial schematic view in axial section of the assembly of Figure 1;
Figure 3 is a view on a larger scale of a detail of Figure 2;
Figure 4 is a partial schematic view in perspective of another embodiment of an assembly according to the invention, comprising a filling head and a fuel pipe;
Figure 5 is a partial schematic view in axial section of the assembly of Figure 4; and
Figure 6 is a view on a larger scale of a detail of Figure 5.

### DETAILED DESCRIPTION

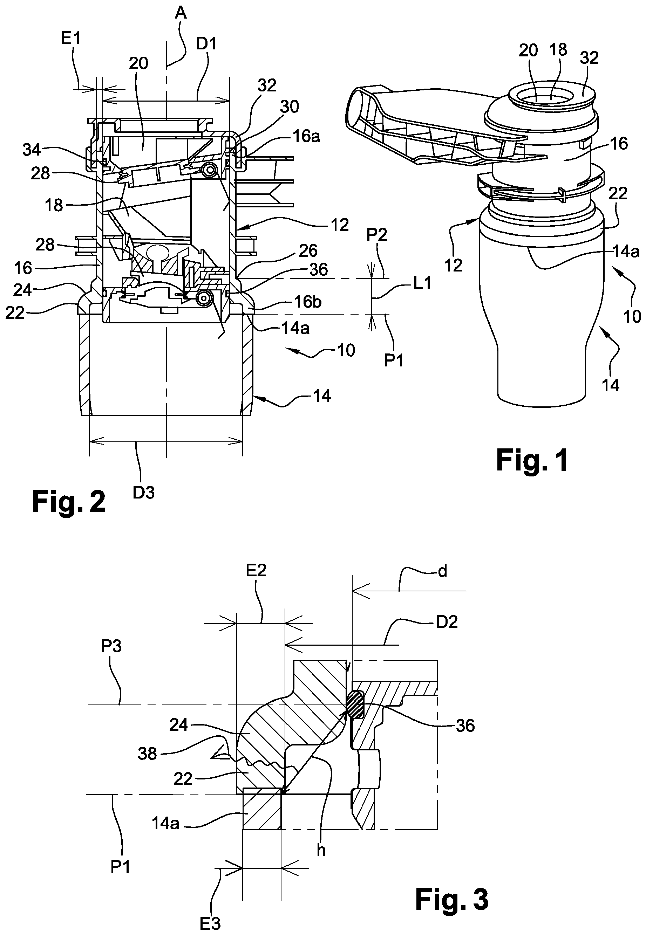

Figure 1 shows a first exemplary embodiment of an assembly 10 according to the invention comprising a filling head 12 and a fuel pipe 14. As mentioned in the foregoing, this assembly 10 is intended to be fitted to a vehicle, the head 12 in general being accessible through a flap of the vehicle and the pipe 14 connecting the head 12 to the fuel tank of the vehicle.

The vehicle tank is filled by a means of a filling nozzle which is inserted into the head 12 which essentially comprises two parts, namely a tubular sleeve 16 and a ring 18 mounted in the sleeve 16 (Figure 2).

The fuel pipe 14 has a tubular overall shape and has one end 14a, in this instance the upper end, intended to be fixed by welding, for example using a heating mirror, to the fuel pipe 14. The end 14a of the pipe has an internal diameter denoted D3. Its tubular wall has a thickness denoted E3 at this end 14a and is made of HDPE (Figure 3).

Moreover, although this is not visible in the drawings, the cylindrical internal surface of the pipe 14 is covered with a barrier layer impermeable to the fuel and thus making it possible to avoid the migration of fuel through the tubular wall of the pipe 14.

In the embodiment of Figures 1 to 3, the head 12 is of the capless type.

The sleeve 16 has a tubular overall shape and is made of HDPE. It is made as a single piece. It comprises a first longitudinal end 16a, in this instance an upper end, which defines a filling opening 20, and a second longitudinal end 16b, in this instance a lower end, which is intended to be fixed to the end 14a of the pipe 14.

The sleeve 16, over a major part of its length, has an internal diameter denoted D1 and a wall thickness denoted E1. At its lower end 16b of connection to the pipe 14, the sleeve 16 comprises a cylindrical rim 22. This cylindrical rim has an internal diameter denoted D2 and a wall thickness E2. As can be seen in the drawings, the diameter D2 is greater than the diameter D1 and is also here substantially equal to the diameter D3. The thickness E2 represents 150 to 300% of the thickness E1. The thickness E2 is, for example, around 5 mm. The thickness E2 may be greater than the thickness E3.

Because E2 is greater than E1, the sleeve 16 comprises an additional thickness 24 (which is radial with respect to the axis A of the sleeve or the opening thereof). This additional thickness 24 extends axially from the free edge (when the head has not yet been welded to the pipe) or the welded edge of the end 16b of the sleeve 16 over the entire rim 22 thereof and is extended over part of the rest of the sleeve. The axial distance between the plane P1 passing through the free or welded edge of the end 16b, which is the plane of jointing between the sleeve and the pipe when these are welded together, and a plane P2 passing through the upper end of the additional thickness 24 is denoted L1. The planes P1 and P2 are substantially perpendicular to the axis A and therefore substantially mutually parallel.

The upper end of the additional thickness 24 here forms an annular step 26 on the external cylindrical surface of the sleeve 16.

The ring 18 has a cylindrical overall shape and is mounted coaxially in the sleeve 16. Here it extends over substantially the entire length of the sleeve 16 along the axis A. At its radially external end it comprises an annular bearing flange 30 bearing against the free edge of the end 16a of the sleeve. An annular cover 32 is attached and fixed to this end 16a to hold the ring 18 fixedly in the sleeve 16.

The ring 18 may comprise centring means intended to collaborate with the filling nozzle, and poka-yoke means. The poka-yoke means make it possible to prevent the tank from being filled using a diesel nozzle when the tank contains petrol, or vice versa, so as to prevent the tank from being filled with a petrol nozzle when the tank contains diesel.

The ring 18 comprises at least one flap 28, and, here, two. Each flap is able to move between a closed position and an open position. The movement into the open position is brought about by the insertion of the nozzle and the return to the closed position is generally brought about by return means such as a spring.

The ring 18 is mounted sealingly inside the sleeve 16. In the example depicted, sealing means are mounted between the ring 18 and the sleeve 16.

At its external periphery the ring comprises external annular grooves housing annular seals 34, 36 which collaborate with the sleeve 16 and more particularly with the cylindrical internal surface of diameter D1 of the sleeve.

An upper seal 34 is mounted between the ring 18 and the end 16a of the sleeve. The other, lower, seal 36 is mounted between the ring and the end 16b of the sleeve.

The seals 34, 36 in this instance are o-ring seals made for example of FKM (a fluoroelastomer).

The ring 18 may be made of POM (polyoxymethylene).

A plane passing through the seal 36 and substantially perpendicular to the axis A is denoted P3.

As can be seen in the drawings, the seal 36 collaborates with the additional thickness 24 of the sleeve 16 and is therefore situated in the immediate vicinity of the edge thereof that is welded to the pipe 14.

The axial distance between the planes P1 and P3 (and/or P1 and P2) represents 0.01 · D to 0.3 · D, preferably 0.05 · D to 0.2 · D, and more preferably, 0.1 · D to 0.15 · D.

The seal 36 preferably has a mean diameter d comprised between 0.5 · D and 1 · D, preferably between 0.7 · D and 0.9 · D, and more preferably between 0.75 · D and 0.85 · D.

The closest distance h between the seal 36 and the welded edge is between 0.05 · D and 0.5 · D, preferably between 0.1 · D and 0.3 · D, and more preferably between 0.15 · D and 0.25 · D.

D is an internal diameter of the sleeve 16 and is in particular D1. As an alternative, D is an internal diameter of the pipe 14 and is, for example, D3.

This embodiment is particularly advantageous in so far as the seal 36 is very close to the welded edge and the HDPE wall of the sleeve through which wall fuel is liable to migrate is small in size (length). The additional thickness of this wall makes it possible to limit or even eliminate any leak of fuel as a result of this migration (arrow 38).

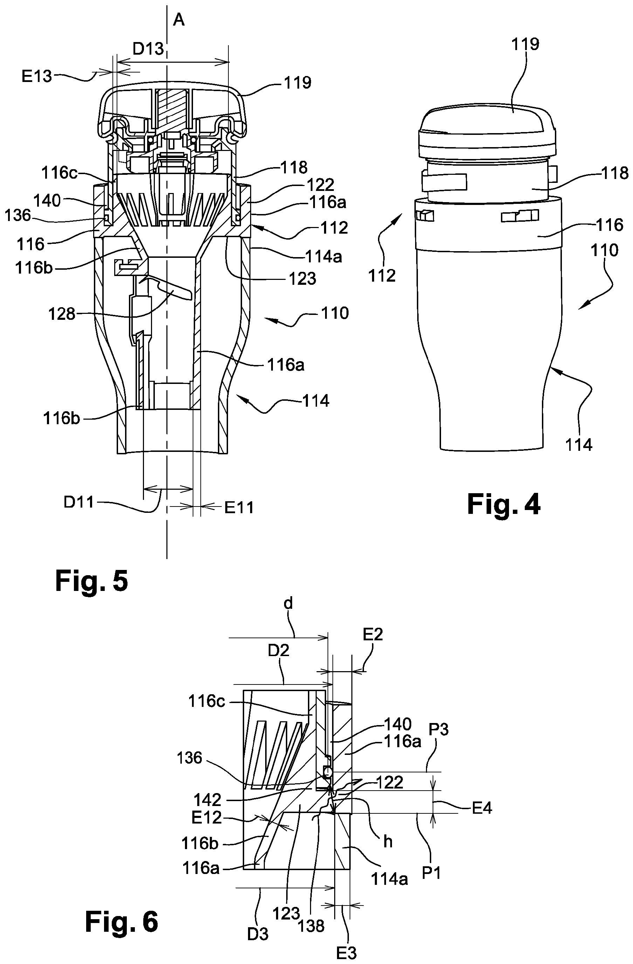

Figure 4 shows another exemplary embodiment of an assembly 110 according to the invention comprising a filling head 112 and a fuel pipe 114.

The description from the preceding exemplary embodiment applies to this other exemplary embodiment to the extent where it does not contradict what follows.

The head 112 essentially comprises two parts, namely a tubular sleeve 116 and a ring 118 which is mounted in the sleeve 116 (Figure 5). The head 112 is also equipped with a cap 119, for example of the quarter-turn type.

The fuel pipe 114 is similar to the one described in the foregoing.

The sleeve 116 has a tubular overall shape and is made of HDPE. It is made as a single piece. It comprises a first longitudinal end 116a, here the upper end, which defines a filling opening 120 and which is intended to be fixed to the end 114a of the pipe 14, and a second longitudinal end 116b, here the lower end, which is housed inside the pipe 114.

The sleeve 116 here comprises several portions arranged one on top of the other along the axis A: a tubular lower portion 116a, a tubular upper portion 116c of greater diameter, and an intermediate portion 116b of frustoconical overall shape widening from the bottom upwards.

The lower portion 116a has an internal diameter denoted D11 and a wall thickness denoted E11. The upper portion 116c has an internal diameter denoted D13 and a wall thickness denoted E13. The intermediate portion 116b has a wall thickness denoted E12. The thicknesses E11, E12 and E13 here are similar.

At its upper end 16a for connection to the pipe 114, the sleeve 116 comprises a cylindrical rim 122. This cylindrical rim 122 has an internal diameter denoted D2 and a wall thickness E2.

The rim 122 extends around part of the intermediate portion 116b or even of the upper portion and is connected to the intermediate portion 116b by a radial wall 123 which has a thickness, this time axial, denoted E4.

The rim 122 is spaced radially away from the portions 116b, 116c and delimits around them an annular space 140 in which to house a lower portion of the ring 118. This space 140 is delimited radially on the outside by an internal cylindrical surface of the rim 122, and radially on the inside by the external cylindrical surface of the upper portion which extends downwards by virtue of an annular additional thickness 142 of a piece of the intermediate portion 116b.

The rim 122 has an internal diameter denoted D2 and a wall thickness denoted E2.

As can be seen in the drawings, the diameter D2 is greater than the diameters D11, D12 and D13 and is also here substantially equal to the diameter D3. The thickness E2 and/or the thickness E4 represent 150 to 300% of the thickness E11, E12 or E13. The thickness E2 and/or E4 is/are for example approximately 5 mm. The thickness E2 and/or E4 may be greater than the thickness E3.

E2 and/or E4 is/are greater than E11, E12 or E13, which means that the sleeve 116 is thickened in the region of its rim 122 and/or of its radial wall 123 of connection of the rim 122 to the rest of the sleeve 116. The additional thickness extends axially over the entire axial dimension of the rim, in the wall 123, and over a piece of the portion 116b, as mentioned in the foregoing in the case of the additional thickness 142.

The ring 118 has a cylindrical overall shape and is mounted coaxially in the sleeve 116 and more particularly in the space 140. Its lower portion is thus engaged in the space 140 and its upper portion is situated above the sleeve 116 and accepts the cap 119 at its upper end.

The ring 118 and/or the sleeve 116 may comprise centring means intended to collaborate with the filling nozzle and poka-yoke means.

The ring 118 and/or the sleeve 116 may comprise at least one flap 128 able to move and urged into a position of rest by return means such as a spring.

The ring 118 is mounted sealingly in the sleeve 116. In the example depicted, sealing means are mounted between the ring 118 and the rim 122 of the sleeve 116.

The lower portion of the ring 118 at its external periphery comprises an external annular groove to house an annular sealing gasket 136 which collaborates with the internal cylindrical surface of diameter D1 of the rim 122.

The seal 136 in this instance is an o-ring seal, made for example of FKM (a fluoroelastomer).

The ring 118 may be made of POM (polyoxymethylene).

A plane passing through the seal 136 and substantially perpendicular to the axis A is denoted P3.

As may be seen in the drawings, the seal 136 is situated in the immediate vicinity of the free edge (when the head has not yet been welded to the pipe) of the sleeve or of the edge of the sleeve welded to the pipe 14.

The axial distance between the planes P1 and P3 represents 0.01 · D to 0.3 · D, preferably 0.05 · D to 0.2 · D and more preferably 0.1 · D to 0.15 · D.

The seal 136 preferably has a mean diameter d comprised between 0.5 · D and 1 · D, preferably between 0.7 D and 0.9 · D and more preferably between 0.75 · D and 0.85 · D.

The closest distance h between the seal 136 and the welded edge is comprised between 0.05 · D and 0.5 · D, preferably between 0.1 · D and 0.3 · D, and more preferably between 0.15 · D and 0.25 · D.

D is an internal diameter of sleeve 116 and in particular is D1. As an alternative, D is an internal diameter of the pipe 114 and is, for example, D3.

This other exemplary embodiment is also particularly advantageous in so far as the seal 136 is very close to the welded edge and the walls (wall 123 and rim 122) made of HDPE of the sleeve through which the fuel is liable to migrate are small in size (thickness in the case of the wall 123 and length in the case of the rim 122). The additional thickness of these walls makes it possible to limit or even eliminate any leak of fuel as a result of this migration (arrow 138).

## Claims

1. Filling head (12, 112) for a fuel tank, particularly of a vehicle, the head comprising a tubular sleeve (16, 116) of which a first longitudinal end (16a, 116a) defines a filling opening and of which a second longitudinal end (16b, 116b) is intended to be fixed to one end (14a, 114a) of a fuel pipe (14, 114), the head further comprising a ring (18, 118) mounted in the said sleeve and comprising a passage orifice for a filling nozzle, the said sleeve being made of HDPE and its second end being intended to be fixed by welding to the said end of the said fuel pipe, the filling head being **characterized in that** at least one annular sealing gasket (36, 136) is mounted between the said ring and the said sleeve near the said second end.

2. Head (12, 112) according to the preceding claim, in which the said at least one annular sealing gasket (36, 136) comprises an O-ring.

3. Head (12, 112) according to the preceding claim, in which the said at least one annular sealing gasket (36, 136) is housed in an external annular groove of the said ring (18, 118) and presses against an internal cylindrical surface of the said sleeve (16, 116).

4. Head (12, 112) according to one of the preceding claims, in which the said second end (16b, 116b) of the said sleeve (16, 116) has an additional thickness (24, 142).

5. Head (12, 112) according to claim 4, in which the said additional thickness (24) extends along an axis (A) of the said sleeve (16, 116), from the said second end (16b, 116b) to beyond the said at least one annular sealing gasket (36, 136).

6. Head (12, 112) according to one of the preceding claims, in which the said second end (16b, 116b) comprises a rim (22, 122) or a cylindrical bearing surface for welding, having a diameter D2, which is connected to a cylindrical wall of the said sleeve, having a diameter D1, D2 being greater than D1.

7. Head (12, 112) according to the preceding claim, in which the said at least one annular sealing gasket (36, 136) collaborates with an internal cylindrical surface of the said cylindrical wall or of the said cylindrical rim (22, 122).

8. Head (12, 112) according to Claim 6 or 7 when dependent on Claim 5, in which the said additional thickness (124, 142) extends into the cylindrical rim (22, 122) and a portion of the said cylindrical wall.

9. Head (12, 112) according to one of the preceding claims, in which the said at least one sealing gasket (36, 136) is situated a distance away from a plane (P1) passing through a free welding edge of the said second end, measured along an axis (A) of the said sleeve, which represents 0.01 · D to 0.3 · D, preferably 0.05 · D to 0.2 · D, and more preferably 0.1 · D to 0.15 · D, D being an internal diameter of the said tubular sleeve (16, 116).

10. Head (12, 112) according to one of the preceding claims, in which the said at least one sealing gasket (36, 136) has a mean diameter d comprised between 0.5 · D and 1 · D, preferably between 0.7 · D and 0.9 · D, and more preferably between 0.75 · D and 0.85 · D, D being an internal diameter of the said tubular sleeve (16, 116).

11. Head (12) according to the preceding claim, in which the said additional thickness (24) defines an annular step (26) on an external annular surface of the said cylindrical wall.

12. Assembly comprising a head (12, 112) according to one of the preceding claims and a fuel pipe (14, 114), the said fuel pipe being made of HDPE and having an end (14a, 114a) fixed by welding to the said second end (16b, 116b) of the sleeve (16, 116) of the said head.

13. Assembly according to the preceding claim, in which the said at least one sealing gasket (36, 136) is situated at a distance (L1) from a jointing plane (P1), the joint being made by welding, the distance being measured along an axis (A) of the said sleeve, which represents 0.01 · D to 0.3 · D, preferably 0.05 · D to 0.2 · D, and more preferably 0.1 · D to 0.15 · D, D being an internal diameter of the said tubular sleeve (16, 116) and/or of the said fuel pipe (14, 114).

14. Assembly according to Claim 12 or 13, in which the said at least one sealing gasket (36, 136) has a mean diameter d comprised between 0.5 · D and 1 · D, preferably between 0.7 · D and 0.9 · D, and more preferably between 0.75 · D and 0.85 · D, D being an internal diameter of the said tubular sleeve (16, 116) and/or of the said fuel pipe (14, 114).

15. Assembly according to one of Claims 12 to 14, in which the said ring (18, 118) and/or the said tubular sleeve (16, 116) is at least partially surrounded by the said end of the said fuel pipe (14, 114).

## Patentansprüche

1. Füllkopf (12, 112) für einen Kraftstofftank, insbesondere eines Fahrzeugs, wobei der Kopf eine rohrförmige Hülse (16, 116) umfasst, deren erstes Längsende (16a, 116a) eine Füllöffnung definiert und deren zweites Längsende (16b, 116b) dazu gedacht ist, an einem Ende (14a, 114a) einer Kraftstoffleitung (14, 114) befestigt zu werden, wobei der Kopf ferner einen Ring (18, 118) umfasst, der in der Hülse montiert ist und eine Durchgangsöffnung für eine Fülldüse umfasst, wobei die Hülse aus HDPE gefertigt ist und ihr zweites Ende dazu gedacht ist, durch Schweißen an dem Ende der Kraftstoffleitung befestigt zu werden, wobei der Füllkopf **dadurch gekennzeichnet ist, dass** zumindest eine ringförmige Dichtung (36, 136) zwischen dem Ring und der Hülse nahe dem zweiten Ende montiert ist.

2. Kopf (12, 112) nach dem vorhergehenden Anspruch, wobei die zumindest eine ringförmige Dichtung (36, 136) einen O-Ring umfasst.

3. Kopf (12, 112) nach dem vorhergehenden Anspruch, wobei die zumindest eine ringförmige Dichtung (36, 136) in einer externen ringförmigen Nut des Ringes (18, 118) beherbergt ist und gegen eine interne zylindrische Oberfläche der Hülse (16, 116) drückt.

4. Kopf (12, 112) nach einem der vorhergehenden Ansprüche, wobei das zweite Ende (16b, 116b) der Hülse (16, 116) eine zusätzliche Dicke (24, 142) aufweist.

5. Kopf (12, 112) nach Anspruch 4, wobei sich die zusätzliche Dicke (24) entlang einer Achse (A) der Hülse (16, 116) erstreckt, vom zweiten Ende (16b, 116b) über die zumindest eine ringförmige Dichtung (36, 136) hinaus.

6. Kopf (12, 112) nach einem der vorhergehenden Ansprüche, wobei das zweite Ende (16b, 116b) einen Rand (22, 122) oder eine zylindrische Lageroberfläche zum Schweißen umfasst, die einen Durchmesser D2 aufweist, die mit einer zylindrischen Wand der Hülse verbunden ist, die einen Durchmesser D1 aufweist, wobei D2 größer als D1 ist.

7. Kopf (12, 112) nach dem vorhergehenden Anspruch, wobei die zumindest eine ringförmige Dichtung (36, 136) mit einer internen zylindrischen Oberfläche der zylindrischen Wand oder des zylindrischen Randes (22, 122) zusammenwirkt.

8. Kopf (12, 112) nach Anspruch 6 oder 7, wenn abhängig von Anspruch 5, wobei sich die zusätzliche Dicke (124, 142) in den zylindrischen Rand (22, 122) und einen Teil der zylindrischen Wand erstreckt.

9. Kopf (12, 112) nach einem der vorhergehenden Ansprüche, wobei die zumindest eine Dichtung (36, 136) bei einem Abstand entfernt von einer Ebene (P1) befindlich ist, die durch eine freie Schweißkante des zweiten Endes läuft, gemessen entlang einer Achse (A) der Hülse, die 0,01 · D bis 0,3 · D, vorzugsweise 0,05 · D bis 0,2 · D und noch eher vorzuziehen 0,1 · D bis 0,15 · D darstellt, wobei D ein Innendurchmesser der rohrförmigen Hülse (16, 116) ist.

10. Kopf (12, 112) nach einem der vorhergehenden Ansprüche, wobei die zumindest eine Dichtung (36, 136) einen mittleren Durchmesser aufweist, der zwischen 0,5 · D und 1 · D, vorzugsweise zwischen 0,7 · D und 0,9 · D und noch eher vorzuziehen zwischen 0,75 · D und 0,85 · D enthalten ist, wobei D ein Innendurchmesser der rohrförmigen Hülse (16, 116) ist.

11. Kopf (12) nach dem vorhergehenden Anspruch, wobei die zusätzliche Dicke (24) eine ringförmige Stufe (26) auf einer externen ringförmigen Oberfläche der zylindrischen Wand definiert.

12. Anordnung, umfassend einen Kopf (12, 112) nach einem der vorhergehenden Ansprüche und eine Kraftstoffleitung (14, 114), wobei die Kraftstoffleitung aus HDPE gefertigt ist und ein Ende (14a, 114a) aufweist, das durch Schweißen an dem zweiten Ende (16b, 116b) der Hülse (16, 116) des Kopfes befestigt ist.

13. Anordnung nach dem vorhergehenden Anspruch, wobei die zumindest eine Dichtung (36, 136) bei einem Abstand (L1) von einer verbindenden Ebene (P1) befindlich ist, wobei die Verbindung durch Schweißen hergestellt wird, wobei der Abstand entlang einer Achse (A) der Hülse gemessen wird, der 0,01 · D bis 0,3 · D, vorzugsweise 0,05 · D bis 0,2 · D und noch eher vorzuziehen 0,1 · D bis 0,15 · D darstellt, wobei D ein Innendurchmesser der rohrförmigen Hülse (16, 116) und/oder der Kraftstoffleitung (14, 114) ist.

14. Anordnung nach Anspruch 12 oder 13, wobei die zumindest eine Dichtung (36, 136) einen mittleren Durchmesser aufweist, der zwischen 0,5 · D und 1 · D, vorzugsweise zwischen 0,7 · D und 0,9 · D und noch eher vorzuziehen zwischen 0,75 · D und 0,85 · D enthalten ist, wobei D ein Innendurchmesser der rohrförmigen Hülse (16, 116) und/oder der Kraftstoffleitung (14, 114) ist.

15. Anordnung nach einem der Ansprüche 12 bis 14, wobei der Ring (18, 118) und/oder die rohrförmige Hülse (16, 116) zumindest teilweise von dem Ende der Kraftstoffleitung (14, 114) umgeben ist.

## Revendications

1. Tête de remplissage (12, 112) pour un réservoir de carburant, particulièrement d'un véhicule, la tête comprenant un manchon tubulaire (16, 116) dont une première extrémité longitudinale (16a, 116a) définit une ouverture de remplissage et dont une seconde extrémité longitudinale (16b, 116b) est prévue pour être fixée à une extrémité (14a, 114a) d'un tuyau de carburant (14, 114), la tête comprenant en outre une bague (18, 118) montée dans ledit manchon et comprenant un orifice de passage pour une buse de remplissage, ledit manchon étant fait de HDPE et sa seconde extrémité étant prévue pour être fixée par soudage à ladite extrémité dudit tuyau de carburant, la tête de remplissage étant **caractérisée en ce qu'**au moins un joint d'étanchéité annulaire (36, 136) est monté entre ladite bague et ledit manchon près de ladite seconde extrémité.

2. Tête (12, 112) selon la revendication précédente, dans laquelle ledit au moins un joint d'étanchéité annulaire (36, 136) comprend un joint torique.

3. Tête (12, 112) selon la revendication précédente, dans laquelle ledit au moins un joint d'étanchéité annulaire (36, 136) est logé dans une rainure annulaire externe de ladite bague (18, 118) et presse contre une surface cylindrique interne dudit manchon (16, 116).

4. Tête (12, 112) selon l'une des revendications précédentes, dans laquelle ladite seconde extrémité (16b, 116b) dudit manchon (16, 116) a une épaisseur supplémentaire (24, 142).

5. Tête (12, 112) selon la revendication 4, dans laquelle ladite épaisseur supplémentaire (24) s'étend le long d'un axe (A) dudit manchon (16, 116), à partir de ladite seconde extrémité (16b, 116b) jusqu'au-delà dudit au moins un joint d'étanchéité annulaire (36, 136).

6. Tête (12, 112) selon l'une des revendications précédentes, dans laquelle ladite seconde extrémité (16b, 116b) comprend un rebord (22, 122) ou une surface d'appui cylindrique pour le soudage, ayant un diamètre D2, qui est raccordé à une paroi cylindrique dudit manchon, ayant un diamètre D1, D2 étant supérieur à D1.

7. Tête (12, 112) selon la revendication précédente, dans laquelle ledit au moins un joint d'étanchéité annulaire (36, 136) collabore avec une surface cylindrique interne de ladite paroi cylindrique ou dudit rebord cylindrique (22, 122).

8. Tête (12, 112) selon la revendication 6 ou 7 lorsqu'elle dépend de la revendication 5, dans laquelle ladite épaisseur supplémentaire (124, 142) s'étend dans le rebord cylindrique (22, 122) et une partie de ladite paroi cylindrique.

9. Tête (12, 112) selon l'une des revendications précédentes, dans laquelle ledit au moins un joint d'étanchéité (36, 136) est situé à une distance d'un plan (P1), passant à travers un bord de soudage libre de ladite seconde extrémité, mesurée le long d'un axe (A) dudit manchon, qui représente 0,01 · D à 0,3 · D, de préférence 0,05 · D à 0,2 · D, et mieux encore 0,1 · D à 0,15 · D, D étant un diamètre interne dudit manchon tubulaire (16, 116).

10. Tête (12, 112) selon l'une des revendications précédentes, dans laquelle ledit au moins un joint d'étanchéité (36, 136) a un diamètre moyen d compris entre 0,5 · D et 1 · D, de préférence entre 0,7 , D et 0,9 · D, et mieux encore entre 0,75 · D et 0,85 · D, D étant an diamètre interne dudit manchon tubulaire (16, 116) .

11. Tête (12) selon la revendication précédente, dans laquelle ladite épaisseur supplémentaire (24) définit un épaulement annulaire (26) sur une surface annulaire externe de ladite paroi cylindrique.

12. Ensemble, comprenant une tête (12, 112) selon l'une des revendications précédentes et un tuyau de carburant (14, 114), ledit tuyau de carburant étant fait de HDPE et ayant une extrémité (14a, 114a) fixée par soudage à ladite seconde extrémité (16b, 116b) du manchon (16, 116) de ladite tête.

13. Ensemble selon la revendication précédente, dans lequel ledit au moins un joint d'étanchéité (36, 136) est situé à une distance (L1) d'un plan de jonction (P1), le joint étant fait par soudage, la distance étant mesurée le long d'un axe (A) dudit manchon, qui représente 0,01 · D à 0,3 · D, de préférence 0,05 · D à 0,2 · D, et mieux encore 0,1 · D à 0,15 · D, D étant un diamètre interne dudit manchon tubulaire (16, 116) et/ou dudit tuyau de carburant (14, 114).

14. Ensemble selon la revendication 12 ou 13, dans lequel ledit au moins un joint d'étanchéité (36, 136) a un diamètre moyen d compris entre 0,5 · D et 1 · D, de préférence entre 0,7 · D et 0,9 · D, et mieux encore entre 0,75 · D et 0,85 · D, D étant an diamètre interne dudit manchon tubulaire (16, 116) et/ou dudit tuyau de carburant (14, 114).

15. Ensemble selon l'une des revendications 12 à 14, dans lequel ladite bague (18, 118) et/ou ledit manchon tubulaire (16, 116) sont au moins partiellement entourés par ladite extrémité dudit tuyau de carburant (14, 114).
